# EUROPÄISCHE PATENTSCHRIFT

(11) **EP 3 715 908 B1**
(45) Veröffentlichungstag und Bekanntmachung des Hinweises auf die Patenterteilung: **20.11.2024**
(21) Anmeldenummer: 19165546.3
(22) Anmeldetag: 27.03.2019
(51) Int. Cl.: G01S 7/487

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE OPTIQUE DE DISTANCE

(43) Veröffentlichungstag der Anmeldung: 30.09.2020
(73) Patentinhaber: MicroVision, Inc., Redmond, WA 98052 (US)
(72) Erfinder: Holzhüter, Hanno, 22143 Hamburg (DE)
(74) Vertreter: RGTH

(56) Entgegenhaltungen:
- DE-B3- 102012 112 987
- US-A1- 2014 324 266

## Beschreibung

### Technisches Gebiet

Die Erfindung betrifft ein Verfahren sowie eine Vorrichtung zur optischen Distanzmessung.

### Stand der Technik

LIDAR (Abkürzung für "Light Detection and Ranging") Vorrichtungen sind aus dem Stand der Technik bekannt. Sie umfassen eine Sendeeinheit zum Aussenden von Messpulsen sowie eine Empfangseinheit zum Empfangen von reflektierten Messpulsen, die an Objekten innerhalb eines Messbereichs reflektiert wurden. Anhand des Time of Flight-Prinzips wird mit Hilfe der Lichtgeschwindigkeit auf die Distanz zu den Objekten, an denen die Messpulse reflektiert wurden, geschlossen.

Als Ergebnis von derartigen Laufzeitmessungen wird eine Punktwolke erhalten, bei der jeder Punkt eine einzelne Messung, das heißt das Empfangen eines ausgesandten und reflektierten Messpulses, darstellt. Insgesamt leidet die Güte einer derartigen Punktwolke stark in schwierigen Witterungsbedingungen, wie beispielsweise Nebel, Staub, Gischt, etc. Dies liegt daran, dass die Reflektionen an den Partikeln und deren zugehörigen Punkte der LIDAR Punktwolke fälschlicherweise als Objektreflektionen erkannt werden. Je nach Dichte der Partikel kann dies bis zum völligen Ausfall der Vorrichtung führen.

DE 10 2012 112987 B3 offenbart einen optoelektronischer Sensor sowie ein Verfahren zur Erfassung und Abstandsbestimmung von Objekten.

US 2014/0324266 A1 beschreibt eine Vorrichtung und ein Verfahren zur Bestimmung von Wetterbedingungen unter der Verwendung fahrzeugeigener Sensoren.

Die aus dem Stand der Technik bekannten Vorrichtungen zur Distanzmessung sind selber nicht in der Lage zu erkennen, dass sich diese in einer Partikelwolke befinden. Demnach wird eine Partikelwolke von der Vorrichtung fälschlicherweise als Objekt erkannt. Dies vermindert die Güte der Laufzeitmessung. Da die Vorrichtung dies allerdings nicht erkennt, wird das Ergebnis einer Laufzeitmessung, die durch eine Partikelwolke degradiert ist, mit der gleichen Sicherheit, das heißt mit einem gleich hohen Konfidenzmaß, behandelt wie eine Messung unter Bedingungen ohne Partikelwolke. Eine Einschätzung über die Güte der entstehenden Punktwolke als Ergebnis der Laufzeitmessung kann erst in nachgelagerten Recheneinheiten, die über mehrere Zeitintervalle hinweg eine Bewertung der gelieferten Daten vornehmen, erfolgen.

### Darstellung der Erfindung: Aufgabe, Lösung, Vorteile

Der vorliegenden Erfindung liegt die Aufgabe zugrunde, ein Verfahren sowie eine Vorrichtung zur optischen Distanzmessung derart weiterzuentwickeln, dass die Reflektion von Messpulsen an einer Partikelwolke von einer Reflektion an einem Objekt unterschieden werden kann.

Gelöst wird die vorgenannte Aufgabe durch ein Verfahren zur optischen Distanzmessung, das die Durchführung mehrerer Laufzeitmessungen umfasst.

Eine Laufzeitmessung umfasst das Aussenden mindestens eines, Messpulses, insbesondere genau eines oder einer Vielzahl von Messpulsen, mittels einer Sendeeinheit, sowie die Reflektion mindestens eines ausgesandten Messpulses, insbesondere von ausgesandten Messpulsen, an einer Partikelwolke oder an mindestens einem Objekt, und das Empfangen mindestens eines Messpulses, insbesondere von reflektierten Messpulsen, mittels einer Empfangseinheit. Das Verfahren umfasst die Erzeugung einer Punktwolke auf Basis der Laufzeitmessung. Die Punktwolke ist ein Ergebnis der Laufzeitmessung.

Ferner bevorzugt kann das Verfahren die Bestimmung der Laufzeit jedes ausgesandten, reflektierten und empfangenen Messpulses. Das Verfahren umfasst insbesondere auch das Erzeugen eines Histogramms, in dem die empfangende optische Leistung (bzw. ein auf Basis der gemessenen optischen Leistung entsprechendes elektronisches Signal) versus der ermittelten Laufzeit aufgetragen ist. Ferner kann von mehreren Messpulsen die ermittelte Laufzeit gemittelt werden. Auch dann kann ein Histogramm mit den gemittelten Werten erzeugt werden.

Ferner ergibt jeder reflektierte Messpuls, der mittels der Empfangseinheit empfangen wird, einen Punkt einer Punktwolke, vorzugsweise in einem 2D- oder 3D-örtlichen Koordinatensystem. Als Ergebnis einer Laufzeitmessung wird erfindungsgemäß somit mindestens ein Punkt einer Punktwolke erhalten. Ferner kann die ermittelte Laufzeit von mehreren empfangenden und reflektierten Messpulsen gemittelt werden, sodass diese gemeinsam einen Punkt einer Punktwolke darstellen.

Das Verfahren umfasst die Erzeugung einer Rückstreukurve auf Basis der Laufzeitmessung, wobei das Verfahren eine Auswertung der Rückstreukurve zur Objekterkennung mindestens eines Objektes und/oder mindestens einer Partikelwolke, an der mindestens ein Messpuls reflektiert wurde, umfasst. Das Verfahren umfasst die Bereitstellung einer Empfindlichkeitskurve zur Auswertung der Rückstreukurve, wobei die Auswertung der Rückstreukurve die Ermittlung einer Korrelation zwischen der Empfindlichkeitskurve und der Rückstreukurve umfasst um mittels der Laufzeitmessungen zu ermitteln, ob eine Partikelwolke in einem mittels den Laufzeitmessungen vermessenen Messbereich angeordnet ist und den Laufzeitmessungen jeweils ein Partikelwolkenmerkmal zuzuordnen. Unter dem Begriff "vermessener Messbereich" ist insbesondere der Bereich zu verstehen, den der Messpuls der Laufzeitmessung passiert hat.

Die Ermittlung der Korrelation dient dazu festzustellen, ob sich in einem mittels der Laufzeitmessungen vermessenen Messbereich eine Partikelwolke befindet. In anderen Worten wird ermittelt, ob sich eine Vorrichtung zur Durchführung des Verfahrens in und/oder vor einer Partikelwolke befindet. Vorteilhafterweise umfasst das Verfahren das Ermitteln mittels jeder Laufzeitmessung, ob eine Partikelwolke im Messbereich angeordnet ist und die Zuordnung eines Partikelwolkenmerkmals zu der Laufzeitmessung.

Unter dem Begriff "Partikelwolkenmerkmal" ist insbesondere ein Partikelwolkenstatus und/oder eine Partikelwolkenwahrscheinlichkeit zu verstehen. Das Partikelwolkenmerkmal wird anhand der ermittelten Korrelation bestimmt. Ein Partikelwolkenstatus könnte angeben, ob die Korrelation darauf hindeutet, dass sich eine Partikelwolke in dem Messbereich befindet oder nicht. Der Status könnte somit als duale Ja/Nein-Information vorliegen. Bspw. könnte der Status "Ja" lauten, wenn die Korrelation eine zuvor gesetzte Schwelle überschreitet und "Nein", wenn dieser darunter liegt.

Ferner kann eine Partikelwolkenwahrscheinlichkeit ermittelt werden. Diese könnte als Konfidenzmaß der Tatsache, dass Messpulse an einer Partikelwolke reflektiert wurden, verstanden werden. Das Verfahren kann somit ein Konfidenzmaß zwischen 0 und 100 % ermitteln, wobei 100 % dafür steht, dass die Korrelation sehr hoch ist und somit davon auszugehen ist, dass Messpulse an einer Partikelwolke reflektiert wurden, während 0 % dafür steht, dass die Korrelation verschwindend gering ist und somit davon auszugehen ist, dass kein Messpuls an einer Partikelwolke reflektiert wurde. Insbesondere wird das Konfidenzmaß auf Basis der ermittelten Korrelation ermittelt.

Insbesondere dient die Ermittlung der Korrelation dazu eine Partikelwolke nicht fälschlicherweise als Objekt zu erkennen.

Der Begriff "optische Distanzmessung" ist derart zu verstehen, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen der Sendeeinheit, die den Messpuls ausgesandt hat, und dem Reflektionsgegenstand, das diesen reflektiert hat, plus der Strecke zwischen dem Reflektionsgegenstand und der Empfangseinheit, das den entsprechenden reflektierten Messpuls empfangen hat, zu verstehen. Die reflektierten Messpulse stellen jeweils Rückstreusignale der ausgesandten Messpulse dar. Unter dem Begriff "Reflektionsgegenstand" kann ein Objekt und/oder eine Partikelwolke verstanden werden.

Insbesondere dient das Verfahren zur Anwendung in der fahrerlosen Navigation von Fahrzeugen, insbesondere Automobilen. Vor allem kann das Verfahren zum autonomen Steuern eines Fahrzeuges eingesetzt werden. Ferner kann das Verfahren zur Assistenz eines Fahrers eines Fahrzeuges dienen. Dafür werden insbesondere die Distanzen zu sämtlichen Reflektionsgegenständen, die in einem Messbereich liegen, bestimmt.

Bei einem Messpuls handelt es sich insbesondere um ein optisches, insbesondere elektromagnetisches, Signal. Der Messpuls ist vorteilhafterweise ein Lichtpuls, das heißt ein Puls mit einer Wellenlänge, die nicht aus dem für das menschliche Auge sichtbaren Bereich stammt. Vorzugsweise wird aus Sicherheitsgründen unsichtbares Infrarot verwendet. Bevorzugterweise weist ein Messpuls eine Pulsbreite auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mit Hilfe der Lichtgeschwindigkeit darauf geschlossen werden, welche Strecke der Messpuls in der Laufzeit hinter sich gebracht hat.

Vorzugsweise kann die Empfangseinheit mindestens einen Detektor, beispielsweise einen Fotodetektor, vor allem einen optischen Detektor, umfassen. Die Empfangseinheit kann eine Vielzahl von Empfangselementen umfassen, die vorzugsweise im linearen oder Geiger-Modus arbeiten. Bei den Empfangselementen, die im linearen Modus arbeiten, kann es sich vor allem um Avalanche Fotodioden, PN Fotodioden, PIN Dioden oder Fotomultiplier handeln, während es sich bei den Empfangselementen, die im Geiger-Modus arbeiten, vorzugsweise um Single-Photon-Avalanche Dioden (SPADs) handelt. Bei letzterem wird jedes Photon einzeln vermessen und eine Mitteilung über das erhaltene Histogramm durchgeführt. Bei dem Begriff "Empfangselement" handelt es sich vor allem um Pixel.

Ferner kann die Sendeeinheit eine Vielzahl von Sendeelementen umfassen, die insbesondere jeweils durch einen Laser gebildet sind. Insbesondere ist die Sendeeinheit als "Sendematrix", das heißt als ein Array von Sendeelementen zu verstehen, während die Empfangseinheit als Empfangsmatrix, das heißt als ein Array von Empfangselementen zu verstehen ist. Eine Matrix kann insbesondere als dreidimensionaler, insbesondere plattenförmiger, Körper verstanden werden, auf dessen einen Oberfläche die entsprechenden Elemente, Sendeelemente oder Empfangselemente, angeordnet sind.

Bei dem Begriff "Partikelwolke" handelt es sich insbesondere um eine Anhäufung von Partikeln in Luft. Insbesondere handelt es sich bei einer Partikelwolke um ein Aerosol. Vorteilhafterweise handelt es sich um feste und/oder flüssige feinverteilte Schwebeteilchen in Luft. Beispielsweise kann es sich um flüssige, feinverteilte Flüssigkeitstropfen in Luft handeln, beispielsweise Nebel oder Gischt. Ferner kann es sich um feste, feinverteilte Staubpartikel handeln, beispielsweise Staub oder Smog. Ferner kann unter einer Partikelwolke eine Abgaswolke aus dem Auspuff eines Fahrzeuges verstanden werden, die insbesondere Öl- und Rußqualm umfasst. Die Ausmaße, insbesondere der Durchmesser, der Partikel ist typischerweise kleiner als 1 mm, insbesondere kleiner als 100 µm, am meisten bevorzugt kleiner als 50 µm.

Im Vergleich zu einer Partikelwolke handelt es sich bei einem Objekt im Sinne der Erfindung nicht um ein Aerosol. Es handelt sich vor allem um einen festen oder flüssigen Körper.

Der Begriff "Rückstreukurve" ist als eine Kurve zu verstehen, mit deren Hilfe man auf die von der Empfangseinheit empfangene optische Leistung bezogen auf die ermittelte Laufzeit schließen kann. Insbesondere ist die Rückstreukurve das erzeugte Histogramm einer Laufzeitmessung. Dabei wird die empfangende optische Leistung vorzugsweise in ein elektronisches Signal umgewandelt, das in Bezug auf die ermittelte Laufzeit aufgetragen wird. Zur Erzeugung der Rückstreukurve werden daher vorzugsweise auf Basis der gemessenen optischen Leistung ein entsprechendes elektronisches Signal sowie die Laufzeit mindestens einen ausgesandten und wieder empfangenden Messpulses ermittelt, wobei das mindestens eine entsprechende Wertepaar auf einem Koordinatensystem mit dem elektronischen Signal als y-Achse und der Laufzeit als x-Achse aufgetragen wird.

Bei der Rückstreukurve handelt sich in anderen Worten um das Rohsignal der Laufzeitmessung. Als Rohsignal wird die analoge oder digitale Repräsentation des reflektierten, optischen Signals bezeichnet, in anderen Worten das elektronische Signal, in welches die empfangene reflektierte optische Leistung umgewandelt wird, verstanden. Die Rückstreukurve ist ein Ergebnis aller ausgesandten reflektierten und wieder empfangenen Messpulse der gleichen Laufzeitmessung.

Bei dem Einsatz von Empfangselementen, die im linearen Modus arbeiten, umfasst eine Laufzeitmessung vor allem das Aussenden genau eines Messpulses. Es wird bereits bei dem Empfangen des einzelnen ausgesandten und reflektierten Messpulses Laufzeitinformationen von einer Vielzahl von Photonen berücksichtigt, sodass das erzeugte Histogramm eines einzigen Messpulses die Rückstreukurve darstellt. Dies liegt daran, dass einzelne Photonen an näheren Partikeln der Partikelwolke reflektiert werden, während andere Photonen an weiter entfernten Partikeln reflektiert werden.

Bei dem Einsatz von Empfangselementen im Geiger-Modus umfasst die Laufzeitmessung hingegen das Aussenden einer Vielzahl von Messpulsen, wobei das Histogramm die gemittelten Laufzeiten wiedergibt. Das Histogramm kann die Rückstreukurve darstellen.

Unter dem Begriff "Empfindlichkeitskurve" der Empfangseinheit ist insbesondere die Sensitivitätskurve der Empfangseinheit, insbesondere einer Vorrichtung zur Durchführung des Verfahrens, zu verstehen. Die Empfindlichkeitskurve beschreibt unter anderem, wie empfindlich die Empfangseinheit bzw. einzelne Empfangselemente der Empfangseinheit darauf reagiert, in welcher Distanz zur Empfangseinheit sich ein Reflektionsgegenstand befindet. In anderen Worten beschreibt die Empfindlichkeitskurve den Einfluss der Distanz des Reflektionsgegenstandes, an dem ein Messpuls reflektiert wird, auf die optische Leistung die detektiert wird bei anzunehmender gleichen optischen Leistung des Messpulses. Ferner können andere Faktoren einen Einfluss auf die Empfindlichkeitskurve haben, wie bspw. welche Divergenzen eine Sende- und Empfangseinheit einer Vorrichtung haben und/oder wie weit eine Sende- und Empfangseinheit voneinander angeordnet sind. Wesentliche Einflussfaktoren auf die Empfindlichkeitskurve sind ferner auch das optische und mechanische Design der Empfangseinheit und/oder der Sendeeinheit, sowie die verwendeten elektronischen Bauteile, wie beispielsweise die Empfangselemente und/oder der Sendeelemente, insbesondere Dioden, und/oder auch Verstärker. Die Empfindlichkeitskurve ist somit Empfangseinheiten-spezifisch, insbesondere Vorrichtungsspezifisch bzw. sensorspezifisch.

Die Empfindlichkeitskurve stellt insgesamt eine Erhöhung, in anderen Worten einen "Peak", in einem Koordinatensystem mit dem elektronischen Signal, in das die optischen Leistung umgewandelt wurde, auf der y-Achse und der Laufzeit auf der x-Achse dar, vorzugsweise mit einer ansteigenden Flanke und einer abfallenden Flanke.

Die Form der Empfindlichkeitskurve ergibt sich daraus, dass bei steigender Entfernung natürlich weniger optische Leistung des Rückstreusignals erwartet wird. Allerdings wird aufgrund der oben genannten Einflussfaktoren die maximale Leistung erst ab einem gewissen Abstand zur Empfangseinheit erreicht.

Das Verfahren kann das Bereitstellen einer einzigen gemeinsamen Empfindlichkeitskurve für die gesamte Empfangseinheit und/oder die gesamte Vorrichtung umfassen. Ferner kann das Verfahren die Bereitstellung einer Empfindlichkeitskurve für jedes Empfangselement der Empfangseinheit umfassen. Das Verfahren kann vorteilhafterweise eine Rückstreukurve für jedes einzelne Empfangselement erzeugen. In anderen Worten kann jeder Laufzeitmessung ein Empfangselement zugeordnet werden. Auf Basis der Rückstreukurve und der Empfindlichkeitskurve kann die Korrelation für jedes Empfangselement ermittelt und optional gemittelt werden.

Ferner kann nur ein Anteil der Empfangselemente der Empfangseinheit, bspw. nur ein Empfangselement, zur Partikelwolkenerkennung dienen. In anderen Worten ist die Anzahl der zur Partikelwolkenerkennung dienenden Empfangselemente kleiner als die Gesamtanzahl der Empfangselemente.

Dann wird anhand dieses Empfangselementes die Rückstreukurve und Empfindlichkeitskurve festgestellt.

Die Auswertung umfasst die Ermittlung einer Korrelation zwischen Empfindlichkeitskurve und der Rückstreukurve. Hierbei ist von Vorteil, dass die Empfindlichkeitskurve sehr ähnliche Charakteristiken aufweist, wie ein Abschnitt einer Rückstreukurve, der auf eine Reflektion an einer Partikelwolke zurückzuführen ist.

Vereinfacht beschrieben liegt dies daran, dass eine Partikelwolke sich über einen gewissen Abstandsbereich zu einer Vorrichtung zur Durchführung des Verfahrens erstreckt, sodass einige Messpulse an näher angeordneten Partikeln der Partikelwolke reflektiert werden, während andere Messpulse an weiter entfernten Partikeln der Partikelwolke reflektiert werden. Insgesamt wird typischerweise aus allen Abständen zu einer Vorrichtung zur Durchführung des Verfahrens, die die Partikelwolke einschließt, Reflektionen empfangen. Genau diese Art von Reflektionen wird durch die Empfindlichkeitskurve repräsentiert, die abbildet, wie eine Empfangseinheit, vorzugsweise eine Vorrichtung zur Durchführung des Verfahrens, auf Reflektionen aus allen unterschiedlichen Abständen zu einer Empfangseinheit, insbesondere zu einer Vorrichtung zur Durchführung des Verfahrens, reagiert.

Der Verlauf der Empfindlichkeitskurve und der Abschnitt einer Rückstreukurve, der auf die Reflektion an einer Partikelwolke zurückzuführen ist, ähneln sich somit sehr. Insbesondere ähnelt sich die Form der Kurven. Durch die Ermittlung einer Korrelation zwischen Empfindlichkeitskurve und der Rückstreukurve kann insbesondere festgestellt werden, ob zumindest ein Abschnitt der Rückstreukurve einen ähnlichen Verlauf, insbesondere Form, zur Empfindlichkeitskurve aufweist, und dieser Abschnitt somit auf die Reflektion an einer Partikelwolke zurückzuführen ist.

Unter dem Begriff "Korrelation" ist eine Beziehung zwischen der Rückstreukurve und der Empfindlichkeitskurve zu verstehen. Die Korrelation ist ein Maß dafür, wie ähnlich sich zumindest ein Abschnitt der Rückstreukurve und die Empfindlichkeitskurve, insbesondere deren Form, sind. Dieser Abschnitt der Rückstreukurve könnte nämlich der Reflektion an einer Partikelwolke entsprechen.

Die Rückstreukurve umfasst vor allem mindestens eine Erhöhung, vorzugsweise mehrere Erhöhungen. Eine Erhöhung ist insbesondere dann gegeben, wenn sich diese deutlich vom Rauschen der Rückstreukurve, das heißt in anderen Worten von einer entsprechenden Abweichung der Werte der optischen Leistung bei gleicher Laufzeit, abhebt. Eine Erhöhung ist dann gegeben, wenn die Erhöhung eine maximale optische Leistung aufweist, die vorzugsweise mindestens dem doppelten Rauschen entspricht.

Insbesondere dient die Ermittlung der Korrelation zum Feststellen, ob zumindest ein Abschnitt der Rückstreukurve eine Ähnlichkeit mit der Empfindlichkeitskurve aufweist. Unter dem Begriff "Abschnitt" ist insbesondere ein Teil der Rückstreukurve zu verstehen, der eine Erhöhung der Rückstreukurve umfasst. Insbesondere kann aufgrund der ermittelten Korrelation festgestellt werden, ob bei der Laufzeitmessung eine Partikelwolke vermessen wurde, in anderen Worten, ob Messpulse der Laufzeitmessung an einer Partikelwolke reflektiert wurden.

Das Verfahren umfasst erfindungsgemäß die Erkennung einer Partikelwolke und vorzugsweise die Ermittlung eines Konfidenzmaßes für die Erkennung der Partikelwolke. Insbesondere wird das Konfidenzmaß auf Basis der ermittelten Korrelation ermittelt. Das Konfidenzmaß ist ein Maß der Güte, in anderen Worten der Glaubwürdigkeit, der Erkennung einer Partikelwolke.

Vorzugsweise umfasst das Verfahren eine Ausgabe einer Meldung hinsichtlich des mindestens einen Partikelwolkenmerkmals. Eine Ausgabe könnte bspw. wie folgt lauten: "Partikelwolkenstatus "ja" mit einer Partikelwolkenwahrscheinlichkeit von 75 %".

Das Verfahren umfasst die Durchführung einer Vielzahl von Laufzeitmessungen, wobei vorzugsweise der Partikelwolkenstatus der Laufzeitmessung jeweils "Ja" oder "Nein" lautet. Das Verfahren umfasst das Festlegen einer ersten Schwelle, wobei eine Partikelwolke erkannt wird, wenn die Anzahl der Laufzeitmessungen mit einem Partikelwolkenstatus von "Ja" die erste Schwelle überschreitet. Die erste Schwelle kann als "1" definiert sein, sodass bspw. bereits bei einer Laufzeitmessung mit einem Partikelwolkenstatus von "Ja" eine Partikelwolke erkannt wird. Ferner kann die erste Schwelle derart definiert werden, dass sie 10%, am meisten bevorzugt 20 %, aller Laufzeitmessungen, beträgt.

Ferner kann das Verfahren das Festlegen einer zweiten Schwelle für die Partikelwolkenwahrscheinlichkeit umfassen, wobei eine Partikelwolke erkannt wird, wenn die Anzahl der Laufzeitmessungen mit einer Partikelwolkenwahrscheinlichkeit oberhalb der zweiten Schwelle die erste Schwelle überschreitet.

Das Konfidenzmaß wird insbesondere als Wahrscheinlichkeit dargestellt. Das Verfahren ermittelt somit ein Konfidenzmaß zwischen 0 und 100 %, wobei 100 % dafür steht, dass die Korrelation sehr hoch ist und das Verfahren somit sehr sicher ist, dass Messpulse an einer Partikelwolke reflektiert wurden, während 0 % dafür steht, dass die Korrelation verschwindend gering ist und somit davon auszugehen ist, dass kein Messpuls an einer Partikelwolke reflektiert wurde.

Vorzugsweise umfasst das Verfahren eine Ausgabe einer Meldung hinsichtlich der Erkennung einer Partikelwolke und des ermittelten Konfidenzmaßes. Eine Ausgabe könnte bspw. wie folgt lauten: "Hier wurde eine Partikelwolke mit einem Konfidenzmaß von 75 % erkannt".

Insbesondere wird die Korrelation mit Hilfe einer Faltung der Rückstreukurve mit der Empfindlichkeitskurve ermittelt. Ferner kann die Ermittlung der Korrelation eine Fourier-Transformation umfassen, insbesondere eine schnelle Fourier-Transformation. Die Ermittlung der Korrelation kann ferner die Verwendung eines auf die Empfindlichkeitskurve angepassten Optimalfilters umfassen. Dieser kann zuvor angelernt werden, wobei das Verfahren das Anlernen des Optimalfilters mittels eines neuronalen Netzwerkes umfasst. Insbesondere kann der Optimalfilter mit Hilfe eines Autoencoders angelernt werden. Ferner kann der Optimalfilter mit Hilfe von tiefgehendem Lernen, sogenanntem Deep Learning, angelernt werden.

Zur Bereitstellung der Empfindlichkeitskurve kann das Verfahren eine Simulation der Empfindlichkeitskurve umfassen.

Alternativ oder zusätzlich kann die Empfindlichkeitskurve gemessen werden. Beispielsweise kann mindestens ein Objekt in unterschiedlichen Distanzen zu einer Empfangseinheit, und zwar ohne das Vorhandensein einer Partikelwolke, platziert werden, wobei die Empfangseinheit jeweils die reflektierte optische Leistung empfängt und diese in ein entsprechendes elektronisches Signal umwandelt. Insgesamt ergibt sich somit der Verlauf des elektronischen Signals als Maß der reflektierten, optischen Leistung in Abhängigkeit von der Distanz beziehungsweise von der Laufzeit und somit die Empfindlichkeitskurve. Im Vergleich zu einer Simulation hat eine Messung, insbesondere end-of-line, den Vorteil, dass sie auch das elektrische Verhalten der Empfangseinheit, insbesondere der Vorrichtung zur Durchführung eines Verfahrens, in anderen Worten des Sensors, sowie die Sensor-individuellen mechanischen und optischen Abweichungen beinhaltet. Ferner ist eine Simulation mit sehr viel mehr Aufwand verbunden und könnte unvollständig sein.

Eine Messung der Empfindlichkeitskurve kann spezifisch für die Bauart einer Vorrichtung, in anderen Worten Sensor, zur Durchführung des Verfahrens durchgeführt werden. Unter dem Begriff "Sensorbauart" ist vor allem die Bauart des Sensors, beeinflusst durch das Modell und die entsprechende Technik, bspw. beeinflusst durch den Detektortyp und/oder der Optik und/oder das Messprinzip, zu verstehen.

Insbesondere umfasst das Verfahren eine Berücksichtigung einer möglichen Skalierung der Rückstreukurve in Abhängigkeit einer Dichte einer Partikelwolke bei der Ermittlung der Korrelation. Insbesondere ist die Reflektion an einer Partikelwolke abhängig von dessen Dichte. Je dichter die Partikelwolke ist, desto höher ist das Signal, also indirekt die optische Leistung, in der Rückstreukurve. In anderen Worten kann die Rückstreukurve mit einem Faktor skaliert sein, der die Dichte der Partikelwolke berücksichtigt. Je dichter die Partikelwolke ist, desto mehr ist die Rückstreukurve in Richtung der x-Achse gestaucht. Diese Skalierung kann den Verlauf der Rückstreukurve in Bezug zur Sensitivitätskurve ändern. Obwohl somit die Höhe der Erhöhung in der Rückstreukurve, die auf eine Reflektion an einer Partikelwolke zurückzuführen ist, somit abhängig von dessen Dichte ist, ist die grundsätzliche Form dennoch derart ähnlich zu der der Empfindlichkeitskurve, dass auch bei unterschiedlich dichter Partikelwolke eine Korrelation festgestellt werden kann, die darauf hindeutet, dass es sich bei der Reflektion um die Reflektion an einer Partikelwolke handelt.

In einem weiteren Schritt kann das Verfahren eine Erkennung einer Dichte der Partikelwolke und vorzugsweise die Ermittlung eines Konfidenzmaßes für die Erkennung der Dichte umfassen. Insbesondere kann das Verfahren eine Berücksichtigung der Höhe eines Peaks umfassen. Bevorzugterweise umfasst die Auswertung eine Einschätzung der maximalen Höhe der Erhöhung in der Rückstreukurve, die der Reflektion an einer Partikelwolke zugeordnet wurde, woraus auf die Dichte der Partikelwolke geschlossen werden kann. Das Konfidenzmaß ist ein Maß der Güte, in anderen Worten der Glaubwürdigkeit, der erkannten Dichte.

Das Konfidenzmaß für die Erkennung der Dichte wird insbesondere als Wahrscheinlichkeit dargestellt. Das Verfahren ermittelt somit ein Konfidenzmaß zwischen 0 und 100 %, wobei 100 % dafür steht, dass die Auswertung sehr eindeutig auf die erkannte Dichte schließen lässt und das Verfahren somit sehr sicher ist, dass die Partikelwolke genau diese Dichte aufweist, während 0 % dafür steht, dass die Auswertung nicht eindeutig war und es somit sehr unsicher ist, ob die Partikelwolke wirklich die erkannte Dichte aufweist.

Vorzugsweise umfasst das Verfahren eine Ausgabe einer Meldung hinsichtlich der Erkennung der Dichte und des ermittelten Konfidenzmaßes. Eine Ausgabe könnte bspw. wie folgt lauten: "Die Dichte der Partikelwolke umfasst mit einem Konfidenzmaß von 80 % X Partikel pro Volumen".

Eine Meldung kann vor allem an einen Fahrer eines Fahrzeuges gerichtet sein, wobei das Fahrzeug mittels des vorliegenden Verfahrens navigiert wird und/oder dem Fahrer mit Hilfe des vorliegenden Verfahrens assistiert wird. Die Ausgabe dient insbesondere dazu, den Fahrer darüber zu informieren, dass sich das Fahrzeug in einer Partikelwolke befindet und/oder sich auf eine Partikelwolke zubewegt.

Insbesondere kann das Verfahren die Durchführung mindestens einer weiteren Messung zur Messung von Messdaten mindestens einer weiteren Sensormodalität umfassen. Bei dem Begriff "Sensormodalität" handelt es sich insbesondere um den deutschen Begriff des englischen Begriffs "sensor modality". In anderen Worten handelt es sich bei der Sensormodalität um eine Sensorkategorie. Sensoren unterscheiden sich somit insbesondere durch die Sensormodalität bzw. Sensorkategorie. Insbesondere bestimmt die Sensormodalität das Messverfahren, mit dem die Messdaten erzeugt werden. Bei der Sensormodalität handelt es sich vorzugsweise um Lidar, Radar, Bild oder Ultraschall. Das heißt vorzugsweise bei dem entsprechenden Sensor der Modalität handelt es sich um einen Lidar-Sensor, einen Radar-Sensor, einen Bildsensor, insbesondere eine Kamera, oder einen Ultraschallsensor. Das Verfahren umfasst vorzugsweise die Messung von Radar-Messdaten, Bilddaten und/oder Ultraschalldaten.

Vorzugsweise kann das Verfahren die Ermittlung eines Konfidenzmaßes für die Erkennung einer Partikelwolke für die Messdaten jeder Sensormodalität umfassen, wobei das Verfahren ferner einen Abgleich der ermittelten Konfidenzmaße umfasst. Insbesondere wird ein Gesamtkonfidenzmaß ermittelt, in die die Konfidenzmaße der einzelnen Sensormodalitäten berücksichtigt sind. Dieses Gesamtkonfidenzmaß kann ausgegeben werden zusammen mit einer Meldung.

Insbesondere kann jedem Punkt einer Punktwolke die entsprechende Laufzeitmessung zugeordnet werden. In einem weiteren Schritt umfasst das Verfahren erfindungsgemäß eine Ermittlung eines Konfidenzmaßes für die Laufzeitmessung, insbesondere für die entsprechenden Punkte einer Punktwolke, unter Berücksichtigung der Erkennung einer Partikelwolke.

Insbesondere kann das Konfidenzmaß als Güte einer Laufzeitmessung verstanden werden, also als Qualität beziehungsweise als Wahrscheinlichkeit, dass deren Ergebnisse degradiert, insbesondere durch die Reflektion an einer Partikelwolke, sind. Je größer das Konfidenzmaß ist, desto unwahrscheinlicher ist es, dass sie degradiert ist. Insgesamt ermöglicht somit das vorliegende Verfahren eine Einschätzung der Güte der Laufzeitmessung.

Sobald eine Partikelwolke erkannt wurde, wird das Konfidenzmaß für die Laufzeitmessung, die aufgrund der Partikelwolke degradiert ist, angepasst. Insbesondere wird das Konfidenzmaß im Vergleich zu einer Laufzeitmessung, bei der keine Partikelwolke erkannt wurde, angepasst. Insbesondere wird das Konfidenzmaß abhängig von der Erkennung einer Partikelwolke und/oder der Erkennung deren Dichte und/oder dem Konfidenzmaß für die Erkennung der Partikelwolke und/oder dem Konfidenzmaß für die Erkennung der Dichte ermittelt.

Ferner kann das Verfahren das Erstellen einer 3D Tiefenkarte umfassen, die beschreibt, unter welchen Abständen und/oder Richtungen zu einer Vorrichtung zur Durchführung des Verfahrens eine Partikelwolke und/oder die erkannten Objekte angeordnet sind.

Da das Verfahren eine Vielzahl von Laufzeitmessungen umfasst, können die jeweils oben beschriebenen Schritte vorzugsweise für jede der Messungen durchgeführt werden.

Das Konfidenzmaß für die Laufzeitmessung wird erfindungsgemäß den entsprechenden Punkten einer Punktwolke zugeordnet werden. Das Verfahren umfasst erfindungsgemäß das Erzeugen einer Punktwolke, die Punkte aus verschiedenen Laufzeitmessungen umfasst. Durch die Zuordnung der Konfidenzmaße kann die Punktwolke Punkte mit verschiedenen Konfidenzmaßen enthalten.

Das Verfahren umfasst insbesondere eine Objekterkennung, wobei das Verfahren eine Unterscheidung zwischen Objekten und Partikelwolken umfasst. Insbesondere werden im Rahmen der Objekterkennung Erhöhungen der Rückstreukurve betrachtet und klassifiziert. Um einzuschätzen, ob einer Erhöhung in der Rückstreukurve tatsächlich ein Objekt zugeordnet werden sollte, kann die Information über die Ähnlichkeit, das heißt die Korrelation zwischen Rückstreukurve und Empfindlichkeitskurve, relevant sein. Besteht eine ausreichende Korrelation zwischen einer Erhöhung und der Empfindlichkeitskurve, ist davon auszugehen, dass die Erhöhung nicht auf Reflektion an einem Objekt, sondern auf Reflektionen an einer Partikelwolke resultiert. Das Verfahren umfasst vor allem eine Klassifikation von Erhöhungen als Partikelwolke oder Objekt, wobei das Verfahren ferner bevorzugt eine Ermittlung eines Konfidenzmaßes für jede Klassifikation umfasst. Insbesondere wird das Konfidenzmaß auf Basis der ermittelten Korrelation ermittelt. Das Konfidenzmaß ist ein Maß der Güte, in anderen Worten der Glaubwürdigkeit, der Klassifikation.

Das Konfidenzmaß wird insbesondere als Wahrscheinlichkeit dargestellt. Das Verfahren ermittelt somit ein Konfidenzmaß zwischen 0 und 100 %, wobei 100 % dafür steht, dass die Korrelation sehr eindeutig dafür spricht, dass es sich hier um den jeweils klassifizierten Reflektionsgegenstand handelt, während 0 % dafür steht, dass die Korrelation nicht eindeutig ist, sodass nicht sicher ist, ob die Erhöhung auf die Reflektion an einer Partikelwolke oder einem Objekt zurückzuführen ist.

Vorzugsweise umfasst das Verfahren eine Ausgabe einer Meldung hinsichtlich der Klassifikation und des ermittelten Konfidenzmaßes. Eine Ausgabe könnte bspw. wie folgt lauten: "Hier wurde in Abstand x ein Objekt mit einem Konfidenzmaß von 60 % erkannt".

In einem weiteren Aspekt umfasst die vorliegende Erfindung eine Vorrichtung zur Distanzmessung, wobei die Vorrichtung eine Empfangseinheit und eine Sendeeinheit zur Durchführung mehrerer Laufzeitmessungen umfasst. Die Sendeeinheit dient zum Aussenden mindestens eines Messpulses, insbesondere einer Vielzahl von Messpulsen, während die Empfangseinheit zum Empfangen von mindestens einem reflektierten Messpuls, insbesondere von reflektierten Messpulsen, die zuvor ausgesandt wurden und an einer Partikelwolke oder an mindestens einem Objekt reflektiert wurden, dient. Die Vorrichtung ist zur Durchführung eines oben beschriebenen Verfahrens ausgebildet.

Ferner umfasst die Vorrichtung insbesondere eine Auswerteeinheit, die zur Auswertung der Rückstreukurve zur Objekterkennung, insbesondere von mindestens einen Objekt und/oder einer Partikelwolke, an dem bzw. der Messpulse reflektiert wurden, ausgebildet ist. Ferner ist die Auswerteeinheit zum Ermitteln einer Korrelation zwischen Empfindlichkeitskurve und der Rückstreukurve ausgebildet. Ferner kann die Auswerteeinheit zur Objekterkennung und/oder Erkennen einer Partikelwolke und/oder Erkennen von Objekten und/oder Klassifikation der Dichte einer erkannten Partikelwolke und/oder Ausgabe einer Rückmeldung und/oder Ermitteln eines Konfidenzmaßes und/oder Unterscheidung von Partikelwolken und Objekten ausgebildet sein. Die Auswerteeinheit kann digitale Signalprozessoren, bspw. ASICs und/oder FPGAs und/oder Mikroprozessoren etc. umfassen.

Bei der Vorrichtung handelt es sich vor allem um eine LIDAR-Vorrichtung, insbesondere eine scannende LIDAR-Vorrichtung oder eine Flash LIDAR-Vorrichtung. Insbesondere umfasst die Vorrichtung einen LIDAR-Sensor. Ferner kann die Vorrichtung einen Radar-Sensor, einen Bildsensor, insbesondere eine Kamera, oder einen Ultraschallsensor umfassen. Zudem kann es sich bei der Vorrichtung um ein Fahrassistenzsystem handeln.

In einem weiteren Aspekt umfasst die Erfindung ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

Ferner betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls in Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: eine Empfindlichkeitskurve;
- Figur 3: eine erfindungsgemäße Vorrichtung zur Durchführung eines erfindungsgemäßen Verfahrens;
- Figur 4: eine erfindungsgemäße Vorrichtung mit einer Partikelwolke und einem Objekt;
- Figur 5: eine erfindungsgemäße Vorrichtung mit einer Partikelwolke und einem Objekt;
- Figur 6: eine Rückstreukurve zusammen mit einer Empfindlichkeitskurve; und
- Figur 7: eine weitere Rückstreukurve zusammen mit einer Empfindlichkeitskurve.

### Bevorzugte Ausführungsformen der Erfindung

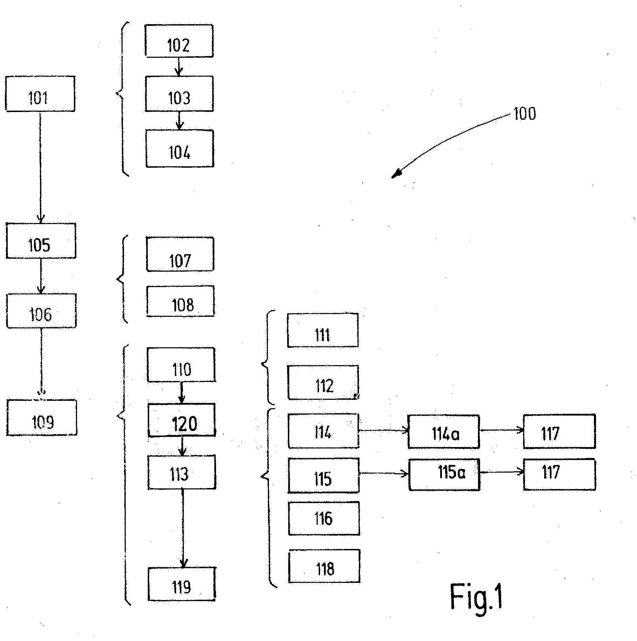

Figur 1 zeigt ein Verfahrensschema eines erfindungsgemäßen Verfahrens (100) zur Distanzmessung. Das Verfahren umfasst eine Durchführung (101) mindestens einer Laufzeitmessung, wobei eine Laufzeitmessung das Aussenden (102) mindestens eines Messpulses mittels einer Sendeeinheit (12), die Reflektion (103) mindestens eines ausgesandten Messpulses und das Empfangen (104) mindestens eines reflektierten Messpulses mittels einer Empfangseinheit (11) umfasst. Das Verfahren kann ferner die Durchführung mehrerer Laufzeitmessungen umfassen.

Das Verfahren umfasst ferner die Erzeugung (105) einer Rückstreukurve (20) auf Basis der Laufzeitmessung, sowie die Bereitstellung (106) einer Empfindlichkeitskurve (21). Die Empfindlichkeitskurve (21) kann simuliert (107) und/oder gemessen (108) werden.

Ferner umfasst das Verfahren (100) die Auswertung (109) der Rückstreukurve (20) zur Objekterkennung (113). Die Auswertung (109) umfasst das Ermitteln (110) einer Korrelation zwischen Empfindlichkeitskurve (21) und der Rückstreukurve (20). Die Korrelation kann mittels einer Faltung (111) und/oder durch das Verwenden (112) eines Optimalfilters bestimmt werden. Das Ermitteln (110) der Korrelation dient dazu mittels der mindestens einen Laufzeitmessung festzustellen, ob eine Partikelwolke (27) in einem mittels der Laufzeitmessung vermessenen Messbereich angeordnet ist und der Laufzeitmessung ein Partikelwolkenmerkmal zuzuordnen (120). Insbesondere umfasst das Verfahren eine derartige Zuordnung (120).

Ferner kann die Auswertung (109) eine Objekterkennung (113) umfassen. Das Verfahren (100) kann das Erkennen (114) einer Partikelwolke (27) umfassen. Dafür kann das Verfahren vor allem das Festlegen einer ersten Schwelle umfassen, wobei eine Partikelwolke erkannt wird (114), wenn die Anzahl der Laufzeitmessungen mit einem Partikelwolkenstatus von "Ja" die erste Schwelle überschreitet. Alternativ oder zusätzlich kann das Verfahren das Festlegen einer zweiten Schwelle für die Partikelwolkenwahrscheinlichkeit umfassen, wobei eine Partikelwolke erkannt wird (114), wenn die Anzahl der Laufzeitmessungen mit einer Partikelwolkenwahrscheinlichkeit oberhalb der zweiten Schwelle die erste Schwelle überschreitet.

Nach dem Erkennen (114) einer Partikelwolke kann das Verfahren (100) ein Konfidenzmaß für die Erkennung ermitteln (114a). Ferner kann das Verfahren (100) die Erkennung (115) einer Dichte der Partikelwolke umfassen sowie die Ermittlung (115a) eines Konfidenzmaßes für die Erkennung der Dichte. Das Verfahren (100) kann die Erkennung (116) von Objekten umfassen, wobei zwischen Partikelwolken (27) und Objekten (26) unterschieden werden kann (118). Ferner kann das Verfahren eine Ausgabe (117) einer Meldung hinsichtlich der Erkennung einer Partikelwolke und/oder deren Dichte umfassen. Ferner kann die Auswertung (109) der Rückstreukurve (20) das Erstellen (119) einer 3D-Tiefenkarte umfassen, die angibt, unter welchen Abständen zu einer Vorrichtung (10) zur Durchführung des Verfahrens (100) eine erkannte Partikelwolke und/oder erkannten Objekte (26) angeordnet sind.

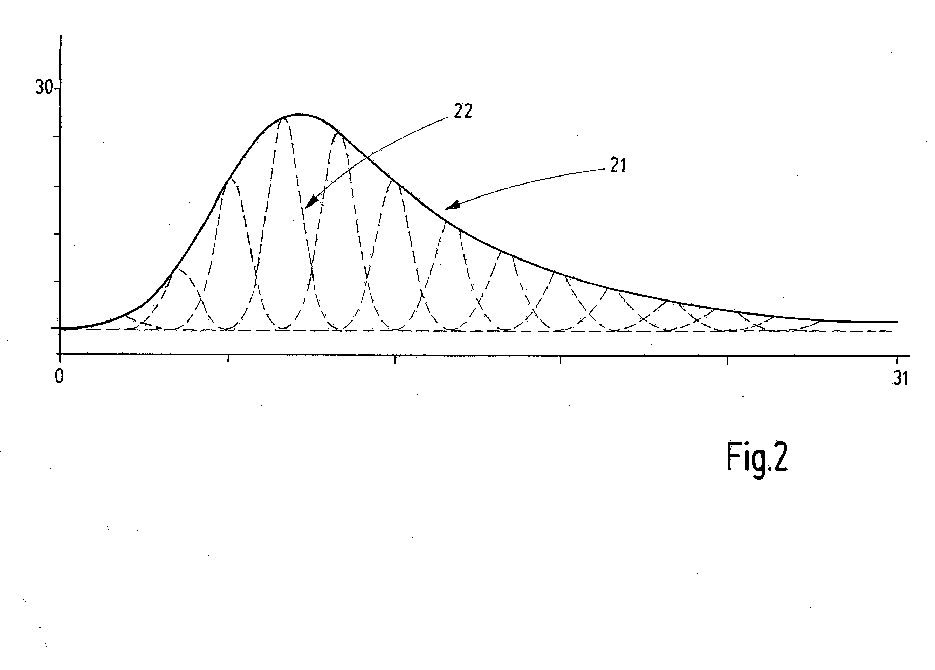

Figur 2 zeigt eine Empfindlichkeitskurve (21). Die Empfindlichkeitskurve ist eine Darstellung eines elektronischen Signals (30), in das die empfangene optische Leistung umgewandelt wurde und das somit als indirektes Maß der optischen Leistung gilt, über die Laufzeit (31). Figur 2 zeigt dabei auf der einen Seite, wie eine Empfindlichkeitskurve (21) durch Einzelmessung (22) vermessen wurde. Die Einzelmessungen (22) basieren auf Messungen, bei denen ein Objekt in unterschiedlichen Distanzen und somit unterschiedlichen Laufzeiten (31) zu einer Empfangseinheit (11) platziert wird. Für jede Distanz beziehungsweise jede Laufzeit (31) wird die optische Leistung nach Reflektion an dem Objekt gemessen und in ein elektronisches Signal (30) umgewandelt wird, das gegen die Laufzeit aufgetragen wird. Es ergibt sich somit durch Interpolation die Empfindlichkeitskurve (21). Ferner kann die Empfindlichkeitskurve (21) simuliert werden. Auch dann ergibt sich der gleiche Verlauf.

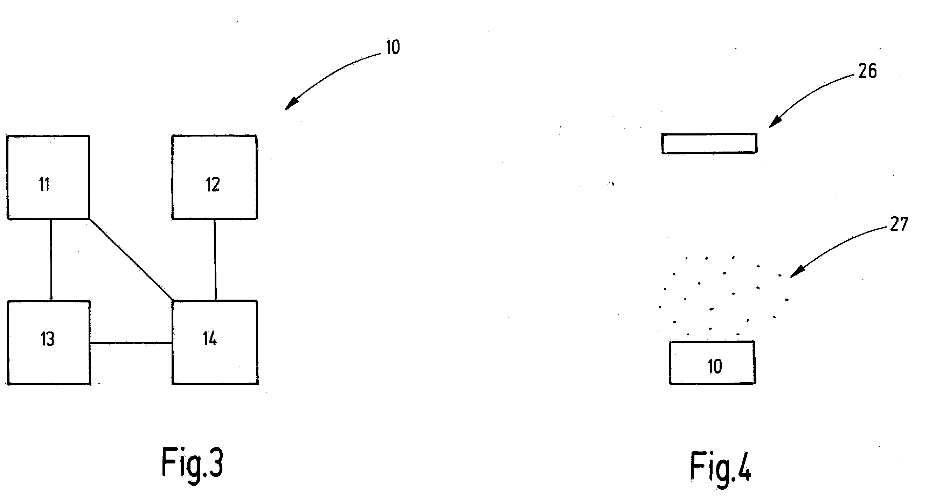

Figur 3 zeigt eine erfindungsgemäße Vorrichtung (10) zur Durchführung eines erfindungsgemäßen Verfahrens (100). Die erfindungsgemäße Vorrichtung (10) umfasst eine Empfangseinheit (11) sowie eine Sendeeinheit (12). Die Sendeeinheit (12) dient zum Aussenden von Messpulsen, während die Empfangseinheit (11) zum Empfangen der reflektierten Messpulse dient. Insgesamt dienen die Empfangseinheit (11) sowie die Sendeeinheit (12) zur Durchführung von Laufzeitmessungen. Die Auswerteeinheit (13) dient dazu, die Rückstreukurve, als Ergebnis der Laufzeitmessung, auszuwerten und zwar mit Hilfe der Empfindlichkeitskurve (21). Ferner weist die Vorrichtung (10) eine Steuereinheit (14) auf, die dazu ausgebildet ist, die Empfangseinheit (11), die Sendeeinheit (12) und/oder die Auswerteeinheit (13) entsprechend anzusteuern.

Figur 4 zeigt eine erfindungsgemäße Vorrichtung (10), vor der sich in unmittelbarer Nähe eine Partikelwolke (27) sowie in einem Abstand zur Vorrichtung (10) sowie zur Partikelwolke (27) ein Objekt (26) befindet.

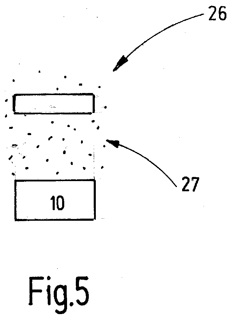

Figur 5 zeigt eine erfindungsgemäße Vorrichtung (10), vor der sich in unmittelbarer Nähe eine Partikelwolke (27) befindet. In der Partikelwolke befindet sich ein Objekt (26).

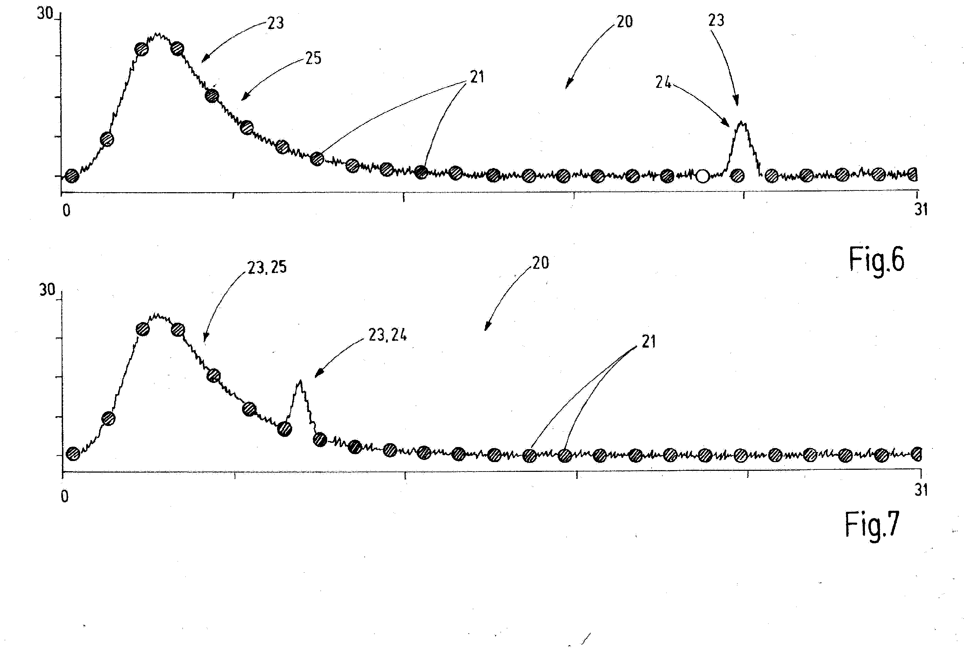

Die entsprechend erhaltene Rückstreukurve (20) nach einer Durchführung einer Laufzeitmessung auf Basis der Figur 4 ist in Figur 6 zu sehen. Die Rückstreukurve (20) ist eine indirekte Darstellung der optischen Leistung über der Laufzeit (31), in dem ein elektronisches Signal (30), in das die empfangene optische Leistung umgewandelt wird gegen die Laufzeit aufgetragen wird. In der Rückstreukurve (20) sind mehrere Erhöhungen (23) zu sehen. Solchen Erhöhungen (23) wird typischerweise ein Objekt zugeordnet.

In Figur 6 ist weiterhin die Empfindlichkeitskurve (21) in gepunkteter Darstellung gezeigt. Im Rahmen der Ermittlung einer Korrelation wird festgestellt, dass zumindest der Abschnitt der Rückstreukurve (20), die die linke Erhöhung (23) umfasst, stark mit der Empfindlichkeitskurve (21) korreliert. Dies ist auch deutlich in Figur 6 zu sehen, und zwar ist deutlich die Ähnlichkeit der Form der Rückstreukurve (20) und der Empfindlichkeitskurve (21) zu erkennen. Auf Basis der großen Korrelation wird die linke Erhöhung (23) als Resultat einer Reflektion an einer Partikelwolke (27) klassifiziert. Es handelt sich somit um eine Erhöhung (25) der Rückstreukurve (20) aufgrund einer Reflektion an einer Partikelwolke (27).

Hinsichtlich der rechten Erhöhung (23) kann keine Korrelation, zumindest keine ausreichende Korrelation, festgestellt werden, sodass die Erhöhung mit ausreichender Wahrscheinlichkeit als Erhöhung (24) aufgrund der Reflektion an einem Objekt erkannt werden kann. Auf diese Weise können Partikelwolken (27) eindeutig von Objekten (26) unterschieden werden.

Die erhaltene Rückstreukurve (20) nach einer Durchführung einer Laufzeitmessung auf Basis der Figur 5 zeigt Figur 7. Dadurch, dass sich das Objekt (26) innerhalb der Partikelwolke (27) befindet, ist die Erhöhung (23), die auf das Objekt zurückzuführen ist, auf der Erhöhung, die von der Partikelwolke resultiert, angeordnet. Die Signale haben sich an dieser Stelle addiert, sodass auch, falls sich ein Objekt (26) innerhalb einer Partikelwolke (27) befindet, dieses deutlich erkannt und von der Partikelwolke (27) unterschieden werden kann.

### Bezugszeichenliste

- 100: Verfahren zur Distanzmessung

- 101: Durchführung mindestens einer Laufzeitmessung
- 102: Aussenden mindestens eines Messpulses mittels einer Sendeeinheit
- 103: Reflektion mindestens eines ausgesandten Messpulses an mindestens einem Objekt
- 104: Empfangen mindestens eines reflektierten Messpulses mittels einer Empfangseinheit
- 105: Erzeugung einer Rückstreukurve auf Basis der Laufzeitmessung
- 106: Bereitstellung einer Empfindlichkeitskurve
- 107: Simulation einer Empfindlichkeitskurve
- 108: Messung einer Empfindlichkeitskurve
- 109: Auswertung der Rückstreukurve

- 110: Ermitteln einer Korrelation zwischen der Empfindlichkeitskurve und der Rückstreukurve
- 111: Faltung
- 112: Verwenden eines Optimalfilters
- 120: Zuordnen eines Partikelwolkenmerkmals zur Laufzeitmessung
- 113: Objekterkennung
- 114: Erkennen einer Partikelwolke
- 114a: Ermitteln eines Konfidenzmaßes für die Erkennung der Partikelwolke
- 115: Erkennen der Dichte der Partikelwolke
- 115a: Ermitteln eines Konfidenzmaßes für die Erkennung der Dichte
- 116: Erkennen von Objekten
- 117: Ausgabe einer Meldung
- 118: Unterscheidung von Partikelwolken und Objekten
- 119: Erstellen einer 3D Tiefenkarte

- 10: Vorrichtung
- 11: Empfangseinheit
- 12: Sendeeinheit
- 13: Auswerteeinheit
- 14: Steuereinheit

- 20: Rückstreukurve
- 21: Empfindlichkeitskurve
- 22: Einzelmessungen
- 23: Erhöhung
- 24: Erhöhung aufgrund einer Reflektion an einem Objekt
- 25: Erhöhung aufgrund einer Reflektion an einer Partikelwolke
- 26: Objekt
- 27: Partikelwolke

- 30: elektronisches Signal
- 31: Laufzeit

## Patentansprüche

1. Verfahren (100) zur optischen Distanzmessung,
wobei das Verfahren (100) die Durchführung (101) mehrerer Laufzeitmessungen umfasst,
wobei eine Laufzeitmessung das Aussenden (102) mindestens eines Messpulses mittels einer Sendeeinheit (12), die Reflektion (103) mindestens eines ausgesandten Messpulses und das Empfangen (104) mindestens eines reflektierten Messpulses mittels einer Empfangseinheit (11) umfasst,
wobei als Ergebnis der Laufzeitmessungen mindestens jeweils ein Punkt einer jeweiligen Punktwolke erhalten wird,
wobei das Verfahren (100) die Erzeugung (105) einer Rückstreukurve (20) auf Basis der Laufzeitmessung umfasst,
wobei das Verfahren (100) eine Auswertung (109) der Rückstreukurve (20) zur Objekterkennung (113) umfasst,
wobei das Verfahren (100) die Bereitstellung (106) einer Empfindlichkeitskurve (21) zur Auswertung (109) der Rückstreukurve (20) umfasst,
wobei die Auswertung (109) die Ermittlung (110) einer Korrelation zwischen der Empfindlichkeitskurve (21) und der Rückstreukurve (20) umfasst, um mittels der Laufzeitmessungen zu ermitteln, ob eine Partikelwolke (27) in einem mittels der Laufzeitmessungen vermessenen Messbereich angeordnet ist und den Laufzeitmessungen jeweils ein Partikelwolkenmerkmal zuzuordnen (120),
wobei das Verfahren (100) eine Erkennung (114) einer Partikelwolke (27) umfasst, wobei das Verfahren eine Ermittlung eines Konfidenzmaßes für jede Laufzeitmessung unter Berücksichtigung der Erkennung der Partikelwolke (27) umfasst,
wobei das Konfidenzmaß für die Laufzeitmessungen jeweils den entsprechenden Punkten der Punktwolke der entsprechenden Laufzeitmessung zugeordnet wird,
wobei das Verfahren das Erzeugen einer Punktwolke umfasst, die Punkte aus verschiedenen Laufzeitmessungen umfasst.

2. Verfahren (100) nach Anspruch 1,
wobei das Verfahren (100) eine Ermittlung (114a) eines Konfidenzmaßes für die Erkennung (114) der Partikelwolke (27) umfasst.

3. Verfahren (100) nach Anspruch oder
wobei die Ermittlung (110) der Korrelation eine Berücksichtigung einer möglichen Skalierung der Rückstreukurve (20) in Abhängigkeit einer Dichte einer Partikelwolke (27) umfasst.

4. Verfahren (100) nach einem der vorangehenden Ansprüche,
wobei zur Bereitstellung (106) der Empfindlichkeitskurve (21) das Verfahren (100) eine Simulation (107) der Empfindlichkeitskurve (21) umfasst.

5. Verfahren (100) nach einem der vorherigen Ansprüche,
wobei zur Bereitstellung (106) der Empfindlichkeitskurve (21) das Verfahren (100) eine Messung (108) der Empfindlichkeitskurve (21) umfasst.

6. Verfahren (100) nach Anspruch 5,
wobei das Verfahren (100) die Verwendung einer Vorrichtung (10) zur optischen Distanzmessung umfasst,
wobei das Verfahren eine Messung (108) der Empfindlichkeitskurve (21) spezifisch für die Vorrichtung (10) umfasst.

7. Verfahren nach Anspruch 1,
wobei der Partikelwolkenstatus der Laufzeitmessungen jeweils "Ja" oder "Nein" lautet,
wobei das Verfahren das Festlegen einer ersten Schwelle umfasst,
wobei eine Partikelwolke erkannt wird (114), wenn die Anzahl der Laufzeitmessungen mit einem Partikelwolkenstatus von "Ja" die erste Schwelle überschreitet.

8. Verfahren nach einem der Ansprüche 1 oder 6,
wobei das Verfahren das Festlegen einer ersten Schwelle umfasst,
wobei das Verfahren das Festlegen einer zweiten Schwelle für die Partikelwolkenwahrscheinlichkeit umfasst,
wobei eine Partikelwolke erkannt wird (114), wenn die Anzahl der Laufzeitmessungen mit einer Partikelwolkenwahrscheinlichkeit oberhalb der zweiten Schwelle die erste Schwelle überschreitet.

9. Verfahren (100) nach einem der Ansprüche 1, 7 oder 8,
wobei das Verfahren (100) eine Erkennung (115) einer Dichte der erkannten Partikelwolke (27) und vorzugsweise die Ermittlung (115a) eines Konfidenzmaßes für die Erkennung (115) der Dichte umfasst.

10. Verfahren (100) nach einem der Ansprüche 1 oder 7 bis 9,
wobei das Verfahren (100) eine Ausgabe (117) einer Meldung hinsichtlich der erkannten Partikelwolke (27) und vorzugsweise des Konfidenzmaßes für die Erkennung der Partikelwolke (27) und/oder eine Ausgabe einer Meldung hinsichtlich der Dichte der erkannten Partikelwolke (27) und vorzugsweise des Konfidenzmaßes für die Erkennung der Dichte umfasst.

11. Verfahren (100) nach einem der vorherigen Ansprüche,
wobei das Verfahren (100) eine Objekterkennung (113) umfasst,
wobei das Verfahren eine Unterscheidung (118) zwischen Objekten (26) und Partikelwolken (27) umfasst.

12. Verfahren (100) nach einem der vorherigen Ansprüche,
wobei die Empfangseinheit (11) eine Vielzahl von Empfangselementen umfasst,
wobei das Verfahren (100) die Bereitstellung (106) einer Empfindlichkeitskurve für jedes Empfangselement umfasst.

13. Vorrichtung (10) zur optischen Distanzmessung,
wobei die Vorrichtung eine Empfangseinheit (11) und eine Sendeeinheit (12) zur Durchführung (101) mehrerer Laufzeitmessungen umfasst,
wobei die Vorrichtung (10) zur Durchführung eines Verfahrens nach einem der Ansprüche 1 bis 12 ausgebildet ist.

14. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 12, gegebenenfalls im Zusammenspiel mit einer Vorrichtung (10) gemäß Anspruch 13, durchzuführen.

15. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 12, gegebenenfalls im Zusammenspiel mit einer Vorrichtung (10) gemäß Anspruch 13, durchzuführen.

## Claims

1. Method (100) for optical distance measurement,
wherein the method (100) comprises performing (101) several runtime measurements,
wherein a runtime measurement comprises transmitting (102) at least one measuring pulse by means of a transmitting unit (12), reflecting (103) at least one transmitted measuring pulse and receiving (104) at least one reflected measuring pulse by means of a receiving unit (11),
wherein at least one point of each point cloud is obtained as the result of the runtime measurements,
wherein the method (100) comprises generating (105) a backscatter curve (20) based on the runtime measurement,
wherein the method (100) comprises evaluating (109) the backscatter curve (20) for object detection (113),
wherein the method (100) comprises providing (106) a sensitivity curve (21) for evaluating (109) the backscatter curve (20),
wherein evaluating (109) comprises determining (110) a correlation between the sensitivity curve (21) and the backscatter curve (20) in order to determine by means of the runtime measurements whether a particle cloud (27) is arranged in a measuring range measured by means of the runtime measurements and to assign (120) a particle cloud feature to each of the runtime measurements,
wherein the method (100) comprises detecting (114) a particle cloud (27),
wherein the method comprises determining a confidence measure for each runtime measurement taking into account the detection of the particle cloud (27),
wherein the confidence measure for the runtime measurements is each assigned to the corresponding points of the point cloud of the corresponding runtime measurement,
wherein the method comprises generating a point cloud comprising points from different runtime measurements.

2. The method (100) according to claim 1,
wherein
the method (100) comprises determining (114a) a confidence measure for detecting (114) the particle cloud (27).

3. The method (100) according to claim 1 or 2,
wherein
determining (110) the correlation comprises considering a possible scaling of the backscatter curve (20) depending on a density of a particle cloud (27).

4. The method (100) according to one of the preceding claims,
wherein
for providing (106) the sensitivity curve (21), the method (100) comprises simulating (107) the sensitivity curve (21).

5. The method (100) according to one of the preceding claims,
wherein
for providing (106) the sensitivity curve (21), the method (100) comprises measuring (108) the sensitivity curve (21).

6. The method (100) according to claim 5,
wherein
the method (100) comprises using a device (10) for optical distance measurement,
wherein the method comprises measuring (108) the sensitivity curve (21) specific to the device (10).

7. The method according to claim 1,
wherein
the particle cloud status of the runtime measurements is "Yes" or "No", respectively,
wherein the method comprises setting a first threshold,
wherein a particle cloud is detected (114) when the number of runtime measurements with a particle cloud status of "Yes" exceeds the first threshold.

8. The method according to one of claims 1 or 6,
wherein
the method comprises setting a first threshold,
wherein the method comprises setting a second threshold for the particle cloud probability,
wherein a particle cloud is detected (114) when the number of runtime measurements with a particle cloud probability above the second threshold exceeds the first threshold.

9. The method (100) according to one of claims 1, 7 or 8,
wherein
the method (100) comprises detecting (115) a density of the detected particle cloud (27) and preferably determining (115a) a confidence measure for the detection (115) of the density.

10. The method (100) according to one of claims 1 or 7 to 9,
wherein
the method (100) comprises outputting (117) a message relating to the detected particle cloud (27) and preferably the confidence measure for detecting the particle cloud (27) and/or outputting a message relating to the density of the detected particle cloud (27) and preferably the confidence measure for detecting the density.

11. The method (100) according to one of the preceding claims,
wherein
the method (100) comprises object detection (113),
wherein the method comprises distinguishing (118) between objects (26) and particle clouds (27).

12. The method (100) according to one of the preceding claims,
wherein
the receiving unit (11) comprises a plurality of receiving elements,
wherein the method (100) comprises providing (106) a sensitivity curve for each receiving element.

13. Device (10) for optical distance measurement,
wherein the device comprises a receiving unit (11) and a transmitting unit (12) for performing (101) several runtime measurements,
wherein
the device (10) is configured to carry out a method according to one of claims 1 to 12.

14. A computer program product comprising a computer-readable storage medium on which is stored a program enabling a computer, after having been loaded into the memory of the computer, to perform a method (100) according to one of claims 1 to 12, optionally in cooperation with a device (10) according to claim 13.

15. A computer-readable storage medium on which a program is stored which, after being loaded into the computer's memory, enables a computer to perform a method according to one of claims 1 to 12, optionally in cooperation with a device (10) according to claim 13.

## Revendications

1. Procédé (100) de mesure optique de distance,
dans lequel le procédé (100) comprend la réalisation (101) de plusieurs mesures de temps de propagation,
dans lequel une mesure du temps de propagation comprend l'émission (102) d'au moins une impulsion de mesure au moyen d'une unité d'émission (12), la réflexion (103) d'au moins une impulsion de mesure émise et la réception (104) d'au moins une impulsion de mesure réfléchie au moyen d'une unité de réception (11),
au moins un point d'un nuage de points respectif étant obtenu comme résultat des mesures de temps de propagation,
dans lequel le procédé (100) comprend la génération (105) d'une courbe de rétrodiffusion (20) sur la base de la mesure du temps de propagation,
le procédé (100) comprenant une évaluation (109) de la courbe de rétrodiffusion (20) pour la reconnaissance d'objet (113),
le procédé (100) comprenant la fourniture (106) d'une courbe de sensibilité (21) pour évaluer (109) la courbe de rétrodiffusion (20),
l'évaluation (109) comprenant la détermination (110) d'une corrélation entre la courbe de sensibilité (21) et la courbe de rétrodiffusion (20), afin de déterminer au moyen des mesures de temps de propagation si un nuage de particules (27) est disposé dans une zone de mesure mesurée au moyen des mesures de temps de propagation et d'attribuer (120) une caractéristique de nuage de particules à chacune des mesures de temps de propagation,
dans lequel le procédé (100) comprend une détection (114) d'un nuage de particules (27),
le procédé comprenant une détermination d'une mesure de confiance pour chaque mesure de temps de propagation en tenant compte de la détection du nuage de particules (27),
la mesure de confiance pour les mesures de temps de propagation étant respectivement attribuée aux points correspondants du nuage de points de la mesure de temps de propagation correspondante,
le procédé comprenant la génération d'un nuage de points comprenant des points provenant de différentes mesures de temps de propagation.

2. Procédé (100) selon la revendication 1,
où
le procédé (100) comprend une détermination (114a) d'une mesure de confiance pour la détection (114) du nuage de particules (27).

3. Procédé (100) selon la revendication 1 ou 2,
où
la détermination (110) de la corrélation comprend une prise en compte d'une éventuelle mise à l'échelle de la courbe de rétrodiffusion (20) en fonction d'une densité d'un nuage de particules (27).

4. Procédé (100) selon l'une quelconque des revendications précédentes,
où
pour fournir (106) la courbe de sensibilité (21), le procédé (100) comprend une simulation (107) de la courbe de sensibilité (21).

5. Procédé (100) selon l'une quelconque des revendications précédentes,
où
pour fournir (106) la courbe de sensibilité (21), le procédé (100) comprend une mesure (108) de la courbe de sensibilité (21).

6. Procédé (100) selon la revendication 5,
où
le procédé (100) comprend l'utilisation d'un dispositif (10) de mesure optique de distance,
dans lequel le procédé comprend une mesure (108) de la courbe de sensibilité (21) spécifique au dispositif (10).

7. Procédé selon la revendication 1,
où
l'état du nuage de particules des mesures de temps de propagation est à chaque fois "oui" ou "non",
dans lequel le procédé comprend la définition d'un premier seuil,
dans lequel un nuage de particules est détecté (114) lorsque le nombre de mesures de temps de propagation avec un état de nuage de particules de "oui" dépasse le premier seuil.

8. Procédé selon l'une des revendications 1 ou 6,
où
le procédé comprend la définition d'un premier seuil,
le procédé comprenant l'établissement d'un second seuil pour la probabilité de nuage de particules,
dans lequel un nuage de particules est détecté (114) lorsque le nombre de mesures de temps de propagation avec une probabilité de nuage de particules supérieure au second seuil dépasse le premier seuil.

9. Procédé (100) selon l'une des revendications 1, 7 ou 8,
où
le procédé (100) comprend une détection (115) d'une densité du nuage de particules détecté (27) et, de préférence, la détermination (115a) d'une mesure de confiance pour la détection (115) de la densité.

10. Procédé (100) selon l'une des revendications 1 ou 7 à 9,
où
le procédé (100) comprend une sortie (117) d'un message concernant le nuage de particules (27) détecté et, de préférence, la mesure de confiance pour la détection du nuage de particules (27) et/ou une sortie d'un message concernant la densité du nuage de particules (27) détecté et, de préférence, de la mesure de confiance pour la détection de la densité.

11. Procédé (100) selon l'une quelconque des revendications précédentes,
où
le procédé (100) comprend une reconnaissance d'objet (113),
le procédé comprenant une discrimination (118) entre des objets (26) et des nuages de particules (27).

12. Procédé (100) selon l'une quelconque des revendications précédentes,
où
l'unité de réception (11) comprend une pluralité d'éléments de réception,
dans lequel le procédé (100) comprend la fourniture (106) d'une courbe de sensibilité pour chaque élément de réception.

13. Dispositif (10) de mesure optique de la distance,
le dispositif comprenant une unité de réception (11) et une unité d'émission (12) pour effectuer (101) plusieurs mesures de temps de propagation,
où
le dispositif (10) est conçu pour mettre en oeuvre un procédé selon l'une des revendications 1 à 12.

14. Produit programme d'ordinateur comprenant un support de stockage lisible par ordinateur sur lequel est stocké un programme qui, après avoir été chargé dans la mémoire de l'ordinateur, permet à un ordinateur d'exécuter un procédé (100) selon l'une quelconque des revendications 1 à 12, éventuellement en coopération avec un dispositif (10) selon la revendication 13.

15. Support de stockage lisible par ordinateur sur lequel est stocké un programme qui, après avoir été chargé dans la mémoire de l'ordinateur, permet à un ordinateur d'exécuter un procédé selon l'une quelconque des revendications 1 à 12, éventuellement en coopération avec un dispositif (10) selon la revendication 13.
